# DEMANDE DE BREVET EUROPEEN

(11) **EP 3 973 769 A1**
(43) Date de publication de la demande: **30.03.2022**
(21) Numéro de dépôt: 20306103.1
(22) Date de dépôt: 28.09.2020
(51) Int. Cl.: A01G 9/24, A01G 31/02

(54) **SERRE CONNECTÉE INTELLIGENTE, PROCÉDÉ DE GESTION ET DE MAINTENANCE D'UNE TELLE SERRE ET SYSTÈME ASSOCIÉ**

(71) Demandeur: MYFOOD FRANCE, 67120 Molsheim (FR)
(72) Inventeur: GANDECKI, Mickaël, 67120 Molsheim (FR); NAZARALY, Johan, 67120 Molsheim (FR); URBAN, Matthieu, 67120 Molsheim (FR)
(74) Mandataire: Ipside

(57) **Abrégé**

L'invention concerne une serre connectée (100) pour une production décentralisée de denrées alimentaires à hautes valeurs nutritionnelles et environnementales mettant en œuvre des techniques de culture hors-sol, comportant une structure (10) qui définit un volume utile de production au sein duquel règnent des conditions favorables à ladite production, des modules de culture (21, 22, 23) et un boitier électronique (30) collectant des données d'une pluralité de capteurs (40) placés à différents endroits de la serre, les modules de culture comprenant au moins un module d'aquaponie (21) et au moins un module de bioponie (22), ledit boitier étant apte à communiquer sur un réseau de communication sans-fil avec une plateforme d'analyse de données (300) associée à ladite serre, de sorte que des données provenant des capteurs soient traitées et analysées par des modèles d'apprentissage automatique.

L'invention porte également sur un système de communication comprenant une telle serre et un procédé de gestion et de maintenance prédictives associé.

## Description

### DOMAINE TECHNIQUE

La présente invention appartient au domaine général de la culture sous serre, et notamment des serres équipées de capteurs et de moyens de communication à distance. Elle concerne plus particulièrement une serre connectée intelligente pour la mise en œuvre de techniques de culture hors-sol, telles que l'aquaponie et la bioponie, ainsi qu'un procédé de gestion et de maintenance prédictives d'une telle serre via un système de communication approprié.

L'invention a également trait aux technologies d'intelligence artificielle (IA) et d'internet des objets (IoT).

### ÉTAT DE L'ART

Depuis la révolution industrielle et l'apparition des serres telles qu'on les connait aujourd'hui, la production agricole dans les serres, communément appelée culture sous serre ou serriculture, s'est développée et positionnée parfois comme un mode de production incontournable dans de nombreuses régions du monde.

La serre est un système de production agricole utilisé pour les cultures de certains légumes, fruits, fleurs ou plantes ornementales. En les protégeant des aléas climatiques et en exploitant au maximum le rayonnement solaire naturel, la serre permet de mettre les cultures dans des conditions très favorables, d'augmenter ainsi les rendements et d'élargir la période de production.

Les serres ont bénéficié des avancées scientifiques et technologiques en matière d'agronomie et de fonctionnement, toujours avec un même objectif, à savoir l'optimisation et l'amélioration de la qualité des produits cultivés.

Plus récemment, les nouvelles technologies telles que l'internet des objets (objets communicants), l'intelligence artificielle, les traitements de données en nuage (cloud) et autres, se sont imposées aux serres pour en faire de nouveaux objets connectés.

En devenant un objet connecté à part entière, qui plus est, présente un intérêt alimentaire indéniable, la serre connectée a suscité l'intérêt du grand public.

De ce fait, de nouveaux concepts de serres individuelles sont apparus. En particulier, les serres sont devenues un mode de production agricole adapté à un cadre urbain (serre sur terrasse, jardin ou toit).

D'un autre côté, les publications scientifiques s'intéressent de plus en plus à l'agriculture intelligente et à l'utilisation des objets connectés et de l'intelligence artificielle dans une certaine mesure pour prédire des évolutions et établir des recommandations.

On connait également quelques solutions en lien avec les serres intelligentes, comme celle présentée dans le document CN106168822A, qui décrit un procédé de régulation d'un environnement dans une serre intelligente consistant à acquérir des informations sur la température de l'air et sur l'humidité relative de l'environnement sous serre ; à calculer une différence instantanée de pression de vapeur saturante dans l'environnement sous serre à l'aide des mesures de température de l'air et d'humidité relative ; à déterminer si cette différence de pression de vapeur saturante se situe dans une plage appropriée prédéfinie ; si tel est le cas, à déterminer l'environnement sous serre actuel comme un environnement approprié ; et si tel n'est pas le cas, à exécuter une opération de régulation correspondante en fonction de la différence de pression de vapeur saturante et de la plage appropriée prédéfinie. En régulant une serre par un calcul de la différence de pressions de vapeur saturante, deux facteurs environnementaux, dont la température et l'humidité, sont pris en compte en même temps, ce qui permet une régulation plus complète par rapport aux technologies existantes. En outre, le mécanisme de transpiration dans les cultures est également pris en compte et utilisé de façon à créer des conditions environnementales plus bénéfiques en termes de croissance des cultures, obtenant un rendement élevé et une qualité élevée, et facilitant une commande précise et automatisée de l'environnement sous serre.

Le document CN104914797A décrit quant à lui un système de gestion agricole intelligent, comprenant une serre intelligente, une passerelle centrale, un routeur, un serveur, une plateforme de gestion et un dispositif terminal, le système de serre intelligente recueillant un paramètre d'environnement de croissance de plante en temps réel et stockant et analysant ce dernier respectivement, et transmettant les données traitées à la passerelle centrale ; la passerelle centrale transmettant les données reçues à la plateforme de gestion, en passant par le routeur et le serveur dans cet ordre ; la plateforme de gestion envoyant une instruction de commande générée au dispositif terminal ; et le dispositif terminal commandant les paramètres d'un dispositif correspondant pour permettre à ce dernier d'être cohérent avec un paramètre prédéfini après avoir reçu l'instruction de commande. L'invention concerne également un procédé de gestion agricole intelligent. Le système de gestion agricole intelligent peut voir un environnement de champ agricole en temps réel, a un rendement relativement élevé et des coûts relativement faibles, et peut réaliser une gestion précise.

Néanmoins, aucune solution, à la connaissance du demandeur, ne concerne des serres connectées sur des réseaux peu contraignants mettant en œuvre des techniques de culture hors-sol et profitant des technologies d'intelligence artificielle pour opérer une gestion et une maintenance améliorées de la serre.

### PRÉSENTATION DE L'INVENTION

La présente invention vise à pallier les inconvénients de l'art antérieur exposés supra.

À cet effet, la présente invention a pour objet une serre connectée pour une production décentralisée de denrées alimentaires mettant en œuvre des techniques de culture hors-sol, comportant une structure qui définit un volume utile de production au sein duquel règnent des conditions favorables à ladite production, des modules de culture et un boitier électronique collectant des données d'une pluralité de capteurs placés à différents endroits de la serre. Cette serre connectée est remarquable en ce que les modules de culture comprennent au moins un module d'aquaponie et au moins un module de bioponie, et en ce que ledit boitier est apte à communiquer sur un réseau de communication sans-fil avec une plateforme d'analyse de données associée à ladite serre, de sorte que des données provenant des capteurs soient traitées et analysées par des modèles d'apprentissage automatique.

Avantageusement, le boitier électronique comporte une unité de traitement et de calcul, un module de communication sans-fil et un dispositif d'alimentation électrique.

Selon un mode de réalisation particulièrement avantageux, le module de communication sans-fil comprend une carte d'extension pour une communication sur un réseau sans-fil à basse consommation adapté à l'internet des objets.

Selon un mode de réalisation, le boitier électronique comporte en outre au moins un capteur de température ou d'humidité intégré.

La serre connectée selon l'invention peut comporter différents capteurs, sondes et dispositifs d'acquisition et de mesure.

Par exemple, la serre connectée comporte au moins un capteur de température de l'air, un capteur d'humidité de l'air, un capteur de température de l'eau, un moyen de mesure du pH, un capteur d'image tel qu'une caméra et un capteur de bruit tel qu'un microphone.

Accessoirement, la serre connectée peut comporter des panneaux photovoltaïques associés à des dispositifs de stockage de l'énergie électrique, ainsi qu'un dispositif de chauffage de type poêle. De préférence, les panneaux photovoltaïques sont semi-transparents.

L'invention a également pour objet un système de communication pour le suivi d'une serre connectée telle que présentée, comprenant une antenne de télécommunication, la plateforme d'analyse et des moyens de communication personnels tels qu'un ordinateur, une tablette numérique et un smartphone.

Efficacement intégrée avec les nouvelles technologies de l'information, la plateforme d'analyse présente une architecture en nuage avec une couche de virtualisation comprenant au moins un système de stockage de données, un serveur informatique et des moyens de traitement et de calcul implémentant des algorithmes d'intelligence artificielle.

Selon un mode de réalisation, l'antenne de télécommunication est une antenne d'un réseau à bas débit et à longue distance, la serre connectée étant apte à communiquer sur un tel réseau.

Selon un mode de réalisation, le système de communication comprend en outre une passerelle réseau par laquelle transite tout signal entre le boitier électronique et l'antenne de télécommunication.

Il en découle que l'invention a pour autre objet un procédé de gestion et de maintenance prédictives d'une serre connectée, mis en œuvre par un tel système de communication, comprenant :
- une étape de mesure et de détection de paramètres dans la serre connectée au moyen des capteurs ;
- une étape de transmission de données collectées par le boitier électronique à la plateforme d'analyse ;
- une étape de traitement et d'analyse des données reçues au moyen d'algorithmes d'intelligence artificielle implémentés sur la plateforme ; et
- une étape de recommandation par l'affichage d'informations sur des interfaces des moyens de communication personnels.

Un avantage capital de l'invention est que l'étape de traitement et d'analyse consiste à exécuter des modèles d'apprentissage automatique pour évaluer et classer des objets et/ou des évènements dans la serre connectée.

Plus particulièrement, l'analyse des données comprend des étapes de reconnaissance d'objets et/ou d'événements sur des images capturées par une caméra installée dans la serre connectée.

De même, l'analyse des données comprend des étapes de reconnaissance de bruits sur des enregistrements effectués par un microphone installé dans la serre connectée.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'une serre connectée, d'un système de communication et d'un procédé de gestion et de maintenance conformes aux principes de l'invention.

### BRÈVE DESCRIPTION DES FIGURES

Les figures sont données à titre purement illustratif pour l'intelligence de l'invention et ne limitent pas la portée de celle-ci. Les différents éléments sont représentés de manière schématique et ne sont pas nécessairement à la même échelle. Sur l'ensemble des figures, les éléments identiques ou équivalents portent la même référence numérique.

Il est ainsi illustré en :
- Figure 1 : une vue partielle en perspective d'une serre connectée selon un mode de réalisation de l'invention ;
- Figure 2 : une vue de face de la serre connectée avec la porte d'accès ouverte, laissant transparaitre un module d'aquaponie ;
- Figure 3 : un schéma d'un système de communication mettant en œuvre la serre connectée ;
- Figure 4 : un détail schématique de l'intérieur de la serre connectée montrant le boitier électronique et quelques capteurs (caméra et microphone) ;
- Figure 5 : un schéma bloc simplifié du boitier électronique ;
- Figure 6 : un exemple d'architecture globale du système de communication ;
- Figure 7 : les principales étapes d'un procédé de gestion et de maintenance prédictives de la serre connectée ;
- Figure 8 : des exemples de serres connectées de différentes formes et dimensions ;
- Figure 9 : un exemple d'interface web pour la gestion de la serre connectée et le suivi de sa production ;
- Figure 10 : un exemple d'interface graphique pour une application mobile dédiée à la gestion de la serre connectée et au suivi de sa production.

### DESCRIPTION DÉTAILLÉE DE MODES DE RÉALISATION

Certains systèmes et procédés bien connus de l'homme du métier, sont ici décrits pour éviter toute insuffisance ou ambiguïté dans la compréhension de la présente invention.

Dans le mode de réalisation décrit ci-après, on fait référence à une serre agricole connectée pour la mise en œuvre de techniques de culture hors-sol telles que l'aquaponie et la bioponie, destinée principalement à un usage privé dans un cadre artisanal par exemple. Il est à noter que de nombreux concepts sont apparus autour de l'utilisation privée et artisanale des serres comme moyen de production alimentaire, tels que la serre de jardin, la serre de terrasse, la serre urbaine, etc.

Cet exemple, non limitatif, est donné pour une meilleure compréhension de l'invention et n'exclut pas la mise en œuvre de techniques de culture différentes, voire plus traditionnelles, dans une serre selon l'invention et l'utilisation de cette serre innovante dans un cadre industriel ou semi industrielle.

Dans la suite de la description, le terme « serre » désigne par extension une serre agricole, et l'expression « serre connectée » renvoie à une serre équipée de moyens aptes à communiquer, de façon autonome, avec d'autres objets connectés sur un réseau de type internet.

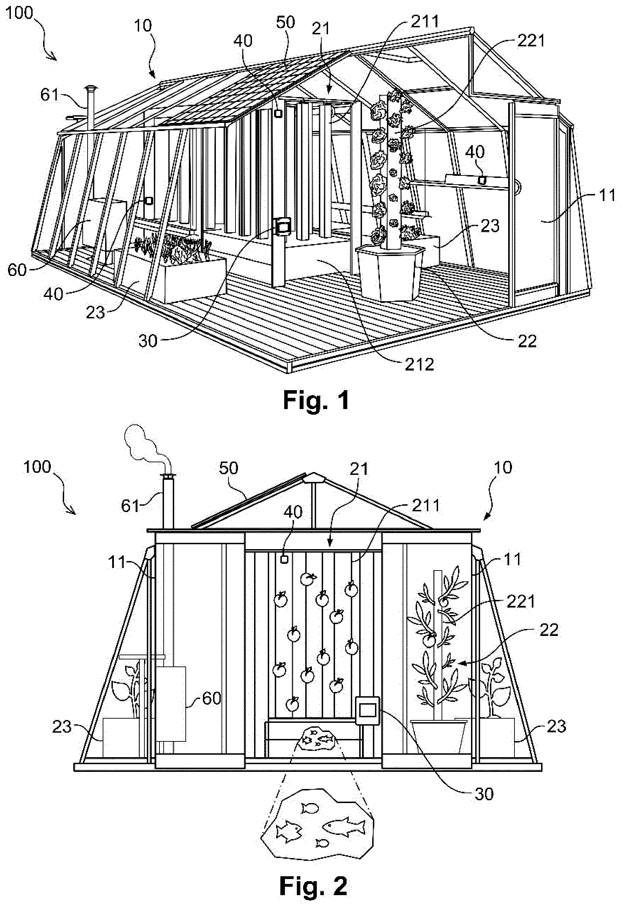

Les figures 1 et 2 représentent une serre connectée 100 constituée classiquement d'une structure 10, définissant un volume utile qui reçoit différents modules de culture 21, 22 et 23, et comportant un boitier électronique 30 apte à effectuer des mesures, à opérer différents traitements et calculs sur des données acquises et à communiquer via une liaison sans-fil, une pluralité de capteurs 40 placés à différents endroits de la serre, des panneaux photovoltaïques 50 ainsi qu'un dispositif d'alimentation électrique associé, et accessoirement un dispositif de chauffage 60.

La serre connectée 100 peut en outre comporter tout autre équipement ou matériel, temporaire ou permanent, nécessaire à son bon fonctionnement, selon le climat dans lequel elle est mise en service.

Préalablement, il convient de rappeler que la structure 10, qui peut être de forme et de dimensions quelconques, comprend principalement un plancher généralement rectangulaire en bordure duquel des montants verticaux ou légèrement inclinés sont fixés, lesquels montants supportant un élément de toiture tel qu'une charpente ou un dôme pourvu d'ouvrants pour dispenser l'aération nécessaire. Ces éléments de structure latéraux et supérieurs sont des poutres et peuvent être fabriqués dans un matériau adapté tel que le bois et le métal. Une fois assemblés, ils sont espacés les uns des autres de sorte à définir des zones destinées à être recouvertes d'une matière transparente ou translucide, comme le verre et le plastique, en forme de panneaux ou d'une simple couverture, pour permettre le passage de la lumière naturelle nécessaire aux cultures de la serre.

Selon l'exemple de réalisation illustré, la serre connectée 100 est essentiellement utilisée pour des cultures hors-sol telles que l'aquaponie et la bioponie, et comprend à cet effet un ou plusieurs modules d'aquaponie 21 et un ou plusieurs modules de bioponie 22. De façon complémentaire, des modules de permaculture 23, ou d'autres modules adaptés à la culture sous serre, peuvent être entreposés dans la serre connectée 100, en fonction de l'espace de production disponible.

Chaque module de culture, d'aquaponie 21 ou de bioponie 22, comporte au moins une tour verticale 211 ou 221, pourvue de plusieurs emplacements permettant une récole aisée des produits cultivés.

Dans le cas des modules d'aquaponie 21, chaque tour verticale 211 est suspendue au-dessus d'un aquarium 212 où sont élevés des poissons, par exemple des carpes, et récupère l'eau riche en nutriments dudit aquarium au moyen d'un système de pompage et d'irrigation adapté avant que l'eau purifiée ne retombe dans l'aquarium, en circuit fermé, selon un principe de fonctionnement connu.

Bien entendu, les modules de culture, en tant que source de production agricole, peuvent être choisis en fonction des besoins de chaque utilisateur et des contraintes climatiques. Les différents modules précités offrent une grande variété de produits selon les saisons, aussi bien des fruits et des légumes que d'autres plantes telles que des fleurs comestibles, médicinales ou ornementales, des micro-pousses, des microalgues, etc.

En effet, les différentes cultures bénéficient de conditions favorables, voire optimales, à l'intérieur de la serre connectée 100. Ces conditions, notamment de température et d'humidité, sont en permanence contrôlées, et ce à partir de mesures effectuées par le boitier électronique 30 et les capteurs 40.

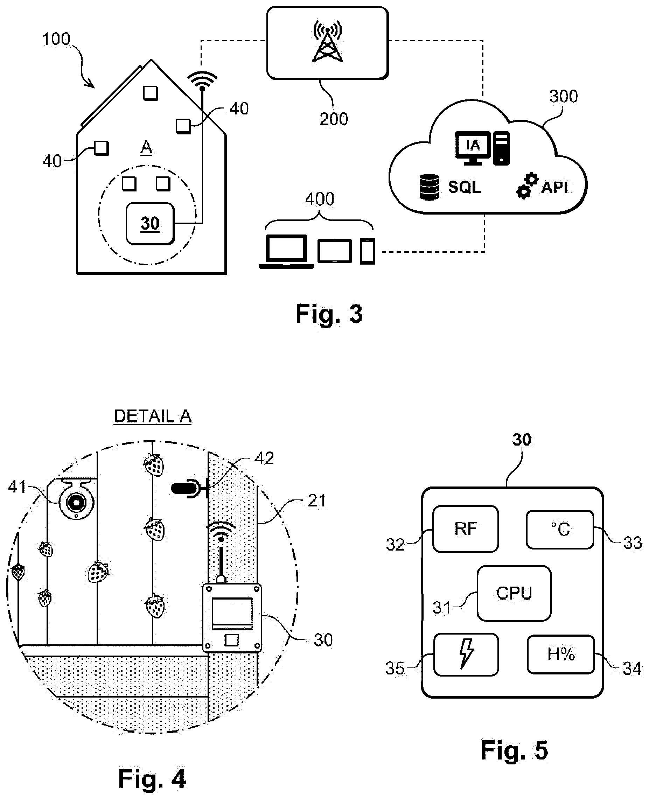

Le boitier électronique 30 possède une puissance de calcul limitée et/ou une source d'énergie restreinte et comprend non exhaustivement, en référence à la figure 5, une unité de traitement et de calcul 31, un module de communication sans-fil 32, des capteurs intégrés, ici de température 33 et d'humidité 34 de l'air, et une batterie électrique 35 ou, alternativement, une unité de contrôle de l'énergie électrique.

L'unité de traitement et de calcul 31 peut être une carte électronique programmable sur laquelle des moyens de traitement et de calcul, sous forme de microcontrôleur ou de microprocesseur, sont disposés. Ces moyens comprennent principalement au moins un système informatique de traitement de données numériques, des mémoires de programmes, des mémoires de données, des dispositifs d'enregistrement et de stockage de données, des convertisseurs, et des moyens de communication et de liaison électrique appropriés.

Par exemple, la carte électronique programmable est un ordinateur mono-carte de type Raspberry PI. Cet ordinateur mono-carte dispose de ports entrée/sortie pour la connexion de cartes d'extension spécifiques et d'une partie des capteurs 40.

Le module de communication sans-fil 32 est un module de communication radiofréquence (RF) et comprend en cela une antenne dédiée. De préférence, le module 32 est une carte d'extension pour un réseau sans-fil à basse consommation adapté à l'internet des objets IoT (*Internet of Things*).

Ce type de réseau, vivement recommandé pour l'internet des objets, est particulièrement adapté à la serre connectée et permet une télécommunication à bas débit, longue distance et faible consommation électrique.

Alternativement, la serre connectée 100 peut comporter un concentrateur de communication multi-protocoles, autrement dit agrégeant plusieurs antennes en un seul point afin d'offrir un maximum de flexibilité et d'adaptabilité.

Le boitier électronique 30 peut également comporter un port d'interface de programmation, de type USB par exemple, une pluralité d'entrées/sorties, ainsi que tout composant électronique nécessaire à son fonctionnement.

Le boitier électronique 30 peut directement être connecté, via des liaisons filaires, à au moins une partie des capteurs 40 dispersés dans la serre connectée 100, afin de collecter les données de ces capteurs.

Ainsi, le téléchargement de données peut être réalisé par une liaison filaire connectée à une prise prévue à cet effet, mais il sera de préférence réalisé par une liaison sans contact électrique, par exemple une liaison magnétique ou électromagnétique à courte portée, qui évite les inconvénients liés à des connecteurs électriques soumis, dans le cas de la serre connectée, à un environnement relativement agressif, notamment de par son humidité.

Les capteurs 40, en plus des capteurs intégrés 33 et 34 au boitier électronique 30, permettent de détecter différents paramètres physiques et chimiques dans la serre connectée 100 afin de fournir à l'utilisateur les informations nécessaires au bon suivi des cultures et à la gestion technique et opérationnelle de ladite serre.

Les capteurs 40 comprennent par exemple des capteurs de température de l'eau des aquariums des modules d'aquaponie, d'humidité des sols, de pression atmosphérique, d'ensoleillement, de composition chimique de l'air ou de l'eau, de détection et de caractérisation d'intrants, de détection et de caractérisation d'engrais, de mesure du pH de l'eau, et d'enherbement.

Les capteurs listés ci-dessus détectent des paramètres dont dépendent directement les cultures et la qualité des produits obtenus selon des principes agronomiques bien connus.

Aussi, les capteurs 40 comprennent des capteurs d'images, de bruit, de mouvement, etc.

Dans le cadre de l'invention, on peut utiliser des capteurs de température tels que des thermistances, des sondes platine ou des circuits intégrés sur silicium, des capteurs d'humidité tels que des capteurs capacitifs ou des capteurs résistifs, des capteurs de pression atmosphérique tels que des baromètres numériques, des capteurs de pH tels que des pH-mètres des capteurs d'image tels que des caméras, multispectrales ou non, des capteurs de bruit tels que des microphones.

D'autres types de capteurs équiperont la serre connectée le cas échéant en fonction des informations qui seront souhaitées pour la détermination de l'état de ladite serre et des cultures s'y trouvant.

Pour des raisons de miniaturisation, certains capteurs sont par exemple conçus selon la technologie des microsystèmes électromécaniques (MEMS). Grâce à cette technologie, différents capteurs sont disponibles à faible coût et présentent des dimensions réduites et un faible poids, de l'ordre du centimètre carré et de quelques grammes respectivement, de sorte à pouvoir être positionnées sur des éléments de la serre sans encombre.

Les panneaux photovoltaïques 50 fournissent l'énergie électrique nécessaire au fonctionnement d'une majeure partie des composants électriques et électroniques intégrés à la serre connectée 100, notamment le boitier électronique 30 et les capteurs 40, et sont de préférence installés sur la toiture de celle-ci afin de bénéficier d'une inclinaison favorable.

De préférence, les panneaux photovoltaïques 50 sont semi-transparents pour laisser passer une partie de la lumière du soleil. Des cellules cristallines et/ou des couches minces transparentes peuvent être prévues à cet effet.

Les panneaux photovoltaïques 50 coopèrent avec un dispositif d'alimentation électrique spécifique permettant de distribuer et de stocker l'énergie électrique produite. Un tel dispositif d'alimentation en énergie comporte des accumulateurs électriques, et préférablement des accumulateurs électriques rechargeables.

Dans une forme alternative de réalisation, la serre connectée 100 est raccordée à une source d'énergie électrique extérieure au moyen d'une ligne d'alimentation qui, le cas échéant, assure l'alimentation électrique d'une pluralité de serres réparties dans un parc par exemple.

Selon un principe fondamental de l'invention, la serre connectée 100 telle que décrite ci-avant est ainsi apte à fonctionner dans un système de communication élargi, allant de ladite serre à l'utilisateur en passant par une plateforme d'analyse indépendante.

La figure 3 schématise le principe de fonctionnement de la serre connectée 100 au sein d'un tel système de communication, qui comprend une antenne réseau 200, une plateforme d'analyse et de stockage 300 et différents terminaux 400 et moyens personnels de communication et d'assistance.

Initialement, le boitier électronique 30 ainsi que les différents capteurs 40 opèrent une acquisition de données sous forme de mesures et de détections de paramètres de la serre connectée 100, lesdites données sont ensuite collectées et traitées par l'unité de traitement et de calcul dudit boitier et transmises sur la plateforme d'analyse 300 par le biais de l'antenne 200 avant d'être communiquées sous forme brute ou modifiée aux terminaux utilisateur 400.

Lorsque le boitier électronique 30 utilise un module de communication sans-fil comprenant une carte d'extension pour un réseau déterminé, l'antenne 200 correspond à une antenne dudit réseau. Par exemple, l'antenne 200 est une antenne radio longue portée associée à un opérateur IoT. En outre, la télécommunication entre la serre connectée 100 et l'antenne 200 peut nécessiter des passerelles adaptées.

Bien entendu, d'autres réseaux de téléphonie mobile peuvent être utilisés dans le cadre de l'invention.

La plateforme 300 comprend principalement un système de stockage de données, un ou plusieurs serveurs informatiques, des moyens de traitement et de calcul implémentant des algorithmes d'intelligence artificielle, et une interface de programmation applicative API (*Application Programming Interface*) permettant de faire le lien entre un programme local et des programmes consommateurs exécutés sur les terminaux utilisateur 400, fixes ou mobiles, tels qu'un ordinateur, une tablette numérique ou un smartphone. La plateforme 300 peut être physique ou, de préférence, virtuelle, auquel cas elle présente une couche de virtualisation regroupant tout ou partie des éléments précités, notamment le système de stockage et les serveurs, de sorte à obtenir une architecture en nuage, communément appelée « cloud » (*cloud computing*), offrant à ladite plateforme une agilité et une capacité de calcul avantageuses.

Ainsi, la plateforme 300 est accessible par l'intermédiaire d'un réseau de type internet et peut être sous forme de logiciel en tant que service SaaS (*Software as a Service*), ou de programme fournisseur accessible via l'API par des programmes consommateurs. De préférence, la plateforme 300 est un SaaS basé web.

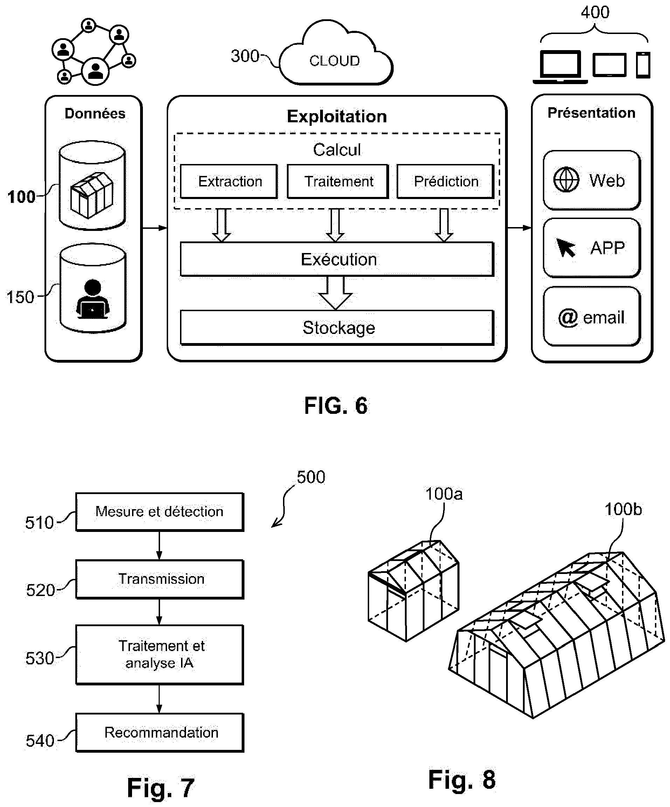

La figure 6 représente l'architecture globale du système de communication et d'exploitation des données de la serre connectée 100 qui s'organise en trois paradigmes : la collecte de données, l'exploitation de données et la présentation d'informations.

Les paramètres mesurés par les capteurs de la serre connectée 100 sont envoyés, en temps réel ou à intervalles de temps réguliers, sur la plateforme d'analyse 300 au moyen d'un réseau sans-fil. A la requête des moyens de calcul de ladite plateforme, des paramètres leur sont transmis par les serveurs. Ces moyens opèrent ensuite des séries de calculs en exécutant des programmes dédiés. Parmi les programmes installés sur la plateforme 300, certains réalisent une simple présentation, interactive ou non, des données recueillies, d'autres procèdent à une interprétation et à une représentation multiforme des données, et d'autres encore compilent des algorithmes d'intelligence artificielle pour prédire des informations non disponibles en l'état.

Ainsi, un suivi intelligent de la serre connectée 100, en termes de gestion et de maintenance, peut être réalisé suivant un procédé général 500 comprenant en référence à la figure 7 :
- une étape initiale 510 de mesure et de détection de paramètres de la serre connectée 100 ;
- une étape 520 de transmission de données collectées à un centre de traitement tel que la plateforme 300 ;
- une étape 530 de traitement et d'analyse des données au moyen d'algorithmes d'intelligence artificielle ; et
- une étape 540 de recommandation à l'utilisateur en vue d'actions sur la serre connectée.

L'étape de mesure et de détection 510 consiste à mesurer différents paramètres physiques et chimiques dans la serre, à capturer des images, à enregistrer des vidéos et des bruits grâce aux capteurs disponibles et au boitier électronique, et plus généralement à relever tout signal nécessaire au traitement subséquent des données.

Les capteurs peuvent à cet effet être « intelligents » et effectuer un prétraitement des données avant que celles-ci soient collectées par le boitier pour un traitement et un post-traitement.

Les prises d'images et la détection de bruits dans la serre sont effectuées, respectivement, par des caméras 41 et des microphones 42 placés à différents emplacements dans la serre comme schématisé sur la figure 4.

Les données recueillies par les capteurs sont ensuite collectées par le boitier électronique 30 à l'état brut ou prétraité avant d'être transmises sur la plateforme d'analyse.

L'étape de transmission 520 consiste à envoyer les données via le réseau de télécommunication utilisé, lesdites données transitant par l'antenne 200 avant leur réception sur la plateforme 300. La transmission entre le boitier électronique 30, et par là-même la serre connectée 100, et l'antenne 200 se fait par une communication RF. Dans le cas d'un réseau adapté à l'internet des objets, les données sont reçues sur une station de base avant d'être communiquées à un backend via une connexion IP. Le backend appartient à la plateforme 300 et stocke les données brutes et traitées. Ces données sont ensuite envoyées aux systèmes d'information utilisateur tels que les terminaux 400 via une connexion internet.

L'étape de traitement et d'analyse 530 permet d'exploiter les données provenant de la serre connectée en vue de prédire l'occurrence d'événements, de signaler un dysfonctionnement, de synthétiser des informations en termes de productivité par exemple, etc.

Cette analyse par intelligence artificielle repose essentiellement sur des modèles d'apprentissage automatique (*Machine Learning*) pour opérer une analyse prédictive dans différentes situations.

L'analyse des images capturées par les caméras permet par exemple de détecter des anomalies et de détecter des objets au moyen d'algorithmes de reconnaissance d'objets et de classifieurs spécifiques. Les objets peuvent être des fruits, des légumes ou des plantes déterminés.

L'apprentissage automatique combine avantageusement les données provenant de différents capteurs et éventuellement des données d'experts agronomiques ou autres afin de générer des modèles prédictifs efficaces et fiables.

Par exemple, les algorithmes sont capables, d'après un modèle connu en pathologie végétale, de prédire l'imminence d'une maladie sur un fruit ou légume lorsque les trois conditions suivantes sont réunies : hôte sensible, agent pathogène et environnement favorable. Un hôte sensible peut correspondre à un fruit présentant une taille et une couleur anormales à un certain stade de maturation, l'agent pathogène peut être détecté soit par les caméras lorsqu'il est apparent, soit par les capteurs chimiques ; et un environnement favorable correspond par exemple au concours de certaines conditions de température et d'humidité favorisant la prolifération d'une contamination localisée.

D'un autre côté, l'analyse des signaux des microphones installés dans la serre permet de détecter une anomalie dans les conduits hydrauliques de la serre par exemple, notamment une fuite, auquel cas un bruit distinctif est détecté. Cette analyse peut également reposer sur l'apprentissage automatique pour améliorer les détections et la reconnaissance de bruit, mais surtout pour prédire un dysfonctionnement dès l'apparition de signaux précurseurs. Cela étant rendu possible et renforcé par l'entrainement des modèles utilisés sur des données provenant de plusieurs serres connectées.

Pour ce faire, des modèles d'apprentissage existants peuvent être adaptés ou de nouveaux modèles peuvent être créés. Dans ce dernier cas, il s'agit tout d'abord de collecter toutes les données à disposition, directement issues des capteurs de la serre connectée ou provenant de sources extérieures (experts, documentation technique, etc.). Ensuite, un modèle d'apprentissage est choisi puis configuré suivant la complexité du cas. De façon subséquente, ce modèle sera construit pour interpréter les données en se basant sur un corpus de connaissances agronomiques et techniques, en lien avec la culture sous serre plus spécialement. Dès lors, l'étape clé de l'apprentissage peut commencer pour permettre au modèle de répondre systématiquement aux données qui lui parviennent. In fine, le modèle est testé, validé puis déployé pour des fins de réglage et d'amélioration.

Enfin, l'étape de recommandation 540 consiste à informer l'utilisateur de la serre connectée des actions à prendre en vue d'améliorer une situation donnée, en fonction des résultats de l'étape d'analyse. Ces recommandations permettent d'améliorer la gestion et la maintenance de la serre en limitant les inspections inutiles. La gestion et la maintenance prédictives permettent ainsi d'apporter une autonomie supplémentaire à la serre connectée.

On comprend aisément que les utilisateurs des serres connectées 100 peuvent constituer une communauté de partage d'informations, grâce à l'utilisation d'une même plateforme, qui devient donc une plateforme collaborative.

La serre connectée peut présenter différentes tailles en fonction des besoins de chaque utilisateur. La figure 8 illustre une serre 100a de petite taille (pour une petite terrasse par exemple) et une serre 100b de grande taille (pour un grand jardin par exemple).

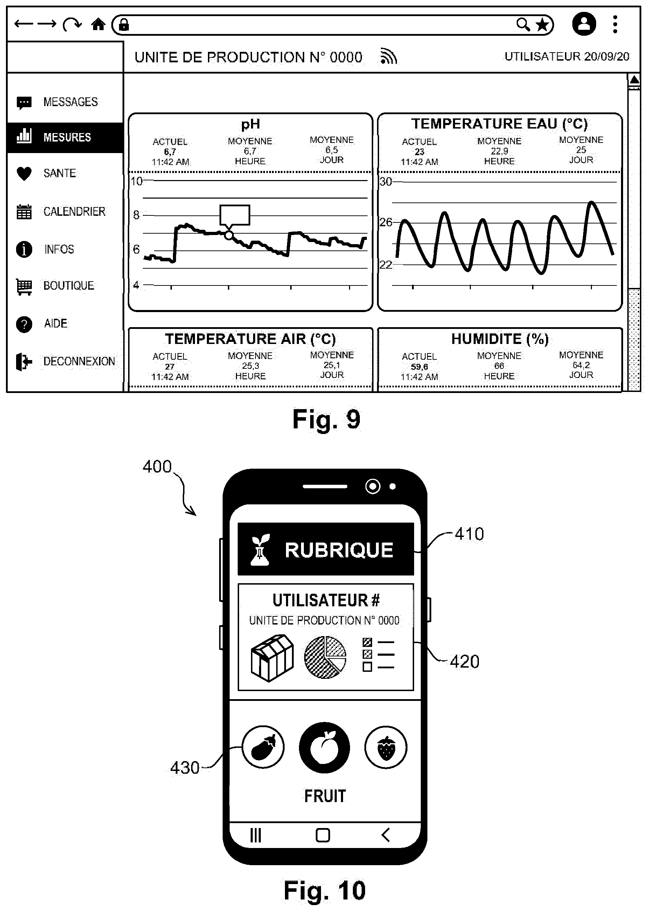

Les figures 9 et 10 représentent des exemples d'interfaces utilisateur dont l'ergonomie permet une navigation simplifiée et intuitive.

Par exemple, l'interface graphique de l'application mobile installée sur un smartphone 400 se compose de rubriques thématiques 410, d'onglets 420, d'icones interactives 430, ainsi que de toute autre élément usuel, selon les règles de l'art du développement d'applications mobiles.

Il ressort clairement de la présente description que certains éléments de la serre connectée et/ou du système de communication peuvent être modifiés, remplacés ou supprimés et que certains ajustements peuvent être apportés au procédé de suivi selon l'invention, sans pour autant sortir du cadre de l'invention défini par les revendications.

## Revendications

1. Serre connectée (100) pour une production de denrées alimentaires mettant en œuvre des techniques de culture hors-sol, comportant une structure (10) qui définit un volume utile de production au sein duquel règnent des conditions favorables à ladite production, des modules de culture (21, 22, 23) et un boitier électronique (30) collectant des données d'une pluralité de capteurs (40) placés à différents endroits de la serre, **caractérisée en ce que** les modules de culture comprennent au moins un module d'aquaponie (21) et au moins un module de bioponie (22), et **en ce que** ledit boitier est apte à communiquer sur un réseau de communication sans-fil avec une plateforme d'analyse de données (300) associée à ladite serre, de sorte que des données provenant des capteurs soient traitées et analysées par des modèles d'apprentissage automatique.

2. Serre connectée selon la revendication 1, dans laquelle le boitier électronique (30) comporte une unité de traitement et de calcul (31), un module de communication sans-fil (32) et un dispositif d'alimentation électrique (35).

3. Serre connectée selon la revendication 2, dans laquelle le module de communication sans-fil (32) comprend une carte d'extension pour une communication sur un réseau sans-fil à basse consommation.

4. Serre connectée selon l'une quelconque des revendications précédentes, dans laquelle le boitier électronique (30) comporte en outre au moins un capteur de température ou d'humidité (33, 34) intégré.

5. Serre connectée selon l'une quelconque des revendications précédentes, comportant au moins un capteur de température de l'air, un capteur d'humidité de l'air, un capteur de température de l'eau, un moyen de mesure du pH, un capteur d'image tel qu'une caméra et un capteur de bruit tel qu'un microphone.

6. Serre connectée selon l'une quelconque des revendications précédentes, comportant en outre des panneaux photovoltaïques (50) associés à des dispositifs de stockage de l'énergie électrique.

7. Système de communication pour le suivi d'une serre connectée (100) selon l'une des revendications 1 à 6, comprenant une antenne de télécommunication (200), la plateforme d'analyse (300) et des moyens de communication personnels (400).

8. Système de communication selon la revendication 7, dans lequel la plateforme d'analyse (300) présente une architecture en nuage avec une couche de virtualisation comprenant au moins un système de stockage de données, un serveur informatique et des moyens de traitement et de calcul implémentant des algorithmes d'intelligence artificielle.

9. Système de communication selon la revendication 7 ou la revendication 8, dans lequel l'antenne de télécommunication (200) est une antenne d'un réseau à bas débit et à longue distance, et dans lequel la serre connectée (100) est apte à communiquer sur un tel réseau.

10. Système de communication selon la revendication 9, comprenant en outre une passerelle réseau par laquelle transite tout signal entre le boitier électronique (30) et l'antenne de télécommunication (200).

11. Procédé (500) de gestion et de maintenance prédictives d'une serre connectée (100), mis en œuvre par un système de communication selon l'une des revendications 7 à 10, comprenant :
- une étape (510) de mesure et de détection de paramètres dans la serre connectée au moyen des capteurs (40) ;
- une étape (520) de transmission de données collectées par le boitier électronique (30) à la plateforme d'analyse (300) ;
- une étape (530) de traitement et d'analyse des données reçues au moyen d'algorithmes d'intelligence artificielle implémentés sur la plateforme ; et
- une étape (540) de recommandation par l'affichage d'informations sur des interfaces des moyens de communication personnels (400).

12. Procédé selon la revendication 11, dans lequel l'étape de traitement et d'analyse consiste à exécuter des modèles d'apprentissage automatique pour évaluer et classer des objets et/ou des évènements dans la serre connectée (100).

13. Procédé selon la revendication 11 ou la revendication 12, dans lequel l'analyse des données comprend des étapes de reconnaissance d'objets sur des images capturées par une caméra (41) installée dans la serre connectée (100).

14. Procédé selon l'une quelconque des revendications 11 à 13, dans lequel l'analyse des données comprend des étapes de reconnaissance de bruits sur des enregistrements effectués par un microphone (42) installé dans la serre connectée (100).
